# DEMANDE DE BREVET EUROPEEN

(11) **EP 2 813 672 A1**
(43) Date de publication de la demande: **17.12.2014**
(21) Numéro de dépôt: 14172126.6
(22) Date de dépôt: 12.06.2014
(51) Int. Cl.: F01D 11/12, F01D 25/24

(54) **Pièce de matériau abradable pour la fabrication d'un secteur de joint annulaire abradable pour turbomachine et procédé de fabrication d'une telle pièce**

(30) Priorité: 13.06.2013 FR 1355493
(71) Demandeur: Composite Industrie, 91070 Bondoufle (FR)
(72) Inventeur: Königs, Karl-Heinz, 91070 BONDOUFLE (FR); Sonois, Gérôme, 92120 MONTROUGE (FR); Martins, Philippe, 91360 VILLEMOISSON sur ORGE (FR)
(74) Mandataire: Cabinet Netter

(57) **Abrégé**

L'invention concerne une pièce 25 moulée de matériau abradable destinée à entrer dans la fabrication d'un secteur de joint abradable annulaire pour turbomachine. La pièce 25 comprend un mélange de résine époxy et d'agent de réticulation. La pièce 25 présente une forme courbée et des dimensions adaptées pour correspondre à un logement prévu à cet effet en surface interne d'un carter de soufflante de turbomachine. L'invention concerne aussi un procédé de fabrication d'une telle pièce.

## Description

L'invention concerne une pièce de matériau abradable destinée à entrer dans la fabrication d'un secteur de joint annulaire abradable pour turbomachine, et en particulier pour moteur d'aéronef.

L'amélioration du rendement des turbomachines et en particulier celui des réacteurs d'avions est l'objet de nombreuses recherches. Parmi les moyens utilisés pour améliorer ce rendement, la maîtrise des écoulements de fluide au sein des turbomachines est capitale. En particulier, il est souhaitable que l'écart annulaire entre un rotor et le stator correspondant soit réduit au minimum. Les tolérances de fabrication et d'assemblage ainsi que les phénomènes de dilatation due aux conditions de température et de vitesse en fonctionnement interdisent un ajustement parfait. Le jeu entre les extrémités des pales, ou aubes, du rotor et la surface interne annulaire du stator varie en fonction des circonstances.

Il est connu de revêtir l'une au moins des surfaces en regard de l'ensemble rotor-stator d'un matériau spécifiquement choisi pour combler l'espace annulaire. Le revêtement peut être appliqué sur la surface annulaire intérieure du stator ou sur l'extrémité radiale des pales du rotor. Ce revêtement est prévu pour s'user de manière contrôlée en fonctionnement. On désigne alors cette couche de matière par l'adjectif "abradable", au sens de "prévu pour subir une abrasion".

Dans le contexte de l'aéronautique, la surface intérieure du stator correspond à une partie de la surface interne du carter du réacteur, ou virole, entourant la soufflante ("fan" en anglais). Le matériau abradable présente une dureté inférieure à celle du matériau constituant l'extrémité radiale des pales et est progressivement détérioré au contact des pales en rotation. Le remplacement partiel ou total de ce matériau abradable fait partie des opérations usuelles de maintenance.

La fabrication/réparation des pistes abradables est en grande partie réalisée manuellement. Le matériau pour former la piste abradable se présente généralement sous une forme pâteuse et est appliqué par un opérateur au moyen de divers outils tels qu'une spatule dans un logement dédié. Le logement prend la forme d'un anneau ou d'une portion de cylindre ménagé directement dans la surface radialement intérieure du carter de soufflante ou dans un support rapporté et solidarisé au carter. L'opérateur applique alors le matériau à l'état pâteux dans le logement annulaire. De manière imagée, cette opération rappelle l'application d'enduit réalisée par un plâtrier dans le domaine du bâtiment. Cette opération est fastidieuse, induit un coût de fabrication élevé, des délais de fabrication/réparation élevés, une mauvaise reproductibilité, des précautions vis-à-vis de l'hygiène, la santé et la sécurité des opérateurs contraignantes et une qualité des produits difficilement contrôlable.

Après application à l'état pâteux, le matériau peut être passé sous un rouleau pour appuyer le matériau contre le support.

Le matériau pâteux est durci, par exemple par une polymérisation à chaud et sous pression contrôlée. Le matériau acquiert alors ses propriétés abradables. Enfin, un contrôle et un usinage de la surface de travail de la piste abradable doivent être réalisés pour en éliminer les imperfections. Par surface de travail on désigne ici la surface libre de la piste destinée à être "raclée" par l'extrémité des pales. Ces opérations sont elles aussi coûteuses en temps et en argent.

La demande de brevet français FR 2 339 741 donne quelques informations contextuelles relatives aux joints abradables.

En outre, les opérations de maintenances/réparations impliquent de retirer le matériau abradable restant et souillé, préalablement à l'application de matériau abradable neuf. Durant toute les opérations de maintenances/réparations le moteur et donc l'aéronef sont immobilisés, ou du moins les supports de piste abradable. Ceci n'est pas économiquement satisfaisant.

L'invention vient améliorer la situation.

La demanderesse propose une pièce moulée de matériau abradable destinée à entrer dans la fabrication d'un secteur de joint abradable annulaire pour turbomachine. La pièce comprend un mélange de résine époxy et d'agent de réticulation. La pièce présente une forme courbée et des dimensions adaptées pour correspondre à un logement prévu à cet effet en surface interne d'un carter de soufflante de turbomachine.

Une telle pièce facilite la fabrication de joint abradable et leur réparation. En outre, les pièces ainsi produites présentent des propriétés améliorées, notamment en tenue mécanique et en risque d'apparition de défaut.

La pièce peut présenter les caractéristiques suivantes, seules ou en combinaison :
- La résine époxy comprend l'un au moins des composants de la liste comprenant le Bisphénol-A-épichlorhydrine et le Bisphénol-F-épichlorhydrine. Ces composants chimiques présentent une bonne abradabilité à l'état solide.
- Le mélange comprend en outre des sphères de verre creuses. Les pièces présentent alors une masse faible réduisant la consommation d'énergie du véhicule pourvu de telles pièces.
- La pièce prend la forme d'un secteur d'anneau de largeur et d'épaisseur sensiblement homogènes dans la pièce. Les opérations de fabrication et de montage sont alors rapides, peu coûteuses et présentent une meilleur reproductibilité. Les risques d'apparition de défaut et d'erreur de montage sont faibles.
- La pièce présente un taux de bulles ou de porosités inférieur à 10% en masse, ou même inférieur à 5%. Les pièces présentent alors une masse faible réduisant la consommation d'énergie du véhicule pourvu de telles pièces. Les risques de propagation de fissures et de défauts sont faibles.

Selon un autre aspect de l'invention, il est proposé un procédé de fabrication d'une pièce de matériau abradable destinée à entrer dans la fabrication d'un secteur de joint annulaire abradable pour turbomachine. Le procédé comprend les étapes suivantes :
a. mélanger une résine époxy et un agent de réticulation dans un mélangeur afin d'obtenir une pâte,
b. laminer la pâte dans un laminoir, le laminoir étant agencé de sorte qu'une bande de pâte présentant une largeur et une épaisseur sensiblement constantes est obtenue,
c. sectionner la bande de pâte en tronçons,
d. faire polymériser et durcir un tronçon dans un moule, le moule étant agencé pour former une pièce de matériau abradable présentant une forme courbée et des dimensions adaptées pour correspondre à un logement prévu à cet effet en surface interne d'un carter de soufflante de turbomachine.

Le procédé permet d'obtenir une pièce aux propriétés améliorées et rendant la fabrication d'un joint abradables moins coûteuse, plus rapide et mieux reproductible.

Le procédé peut présenter les caractéristiques suivantes, seules ou en combinaison :
- Les étapes b. et c. sont mise en oeuvre sur une chaîne de fabrication commune. Les déplacements de bandes de pâte sont ainsi limités et les risques d'erreur de manipulation sont faibles.
- Les tronçons formés sont dimensionnés pour la fabrication d'un secteur de joint annulaire abradable d'environ 360°. La fabrication de tels tronçons dispensent d'opérations ultérieures d'assemblage de plusieurs tronçons entre eux.
- Une étape supplémentaire b' est mise en oeuvre : former des empreintes dans une surface de la bande de pâte. La formation de telles empreintes confère au produit final de meilleures propriétés aérodynamiques. En outre, cette étape peut être réalisée dans la continuité du laminage sans allonger significativement le coût ou le temps de fabrication.
- L'étape b. de laminage et l'étape supplémentaire b' formant les empreintes sont réalisées au moyen d'au moins un rouleau commun, ledit rouleau présentant une surface matricée pour former lesdites empreintes par pression. L'outillage nécessaire pour réaliser les deux étapes est restreint et les risques de dysfonctionnements lors de la fabrication sont faibles.

La présente invention sera mieux comprise à la lecture de la description détaillée de quelques modes de réalisation pris à titre d'exemples nullement limitatifs et illustrés par les dessins annexés, sur lesquels :
- les figures 1 et 2 représentent des étapes de fabrication d'une pièce de matériau abradable selon l'invention,
- la figure 3 est une vue en coupe selon la ligne III-III de la figure 2,
- la figure 4 représente une étape de fabrication d'une pièce de matériau abradable selon l'invention,
- la figure 5 est une vue en coupe selon la ligne V-V de la figure 4,
- la figure 6 représente une pièce de matériau abradable selon l'invention,
- la figure 7 est une vue en coupe d'une étape de fabrication d'un secteur de joint annulaire abradable pour turbomachine utilisant la pièce de matériau abradable selon l'invention,
- la figure 8 est une vue en coupe d'un secteur de joint annulaire abradable pour turbomachine disposé dans son moule de fabrication comprenant la pièce de matériau abradable selon l'invention,

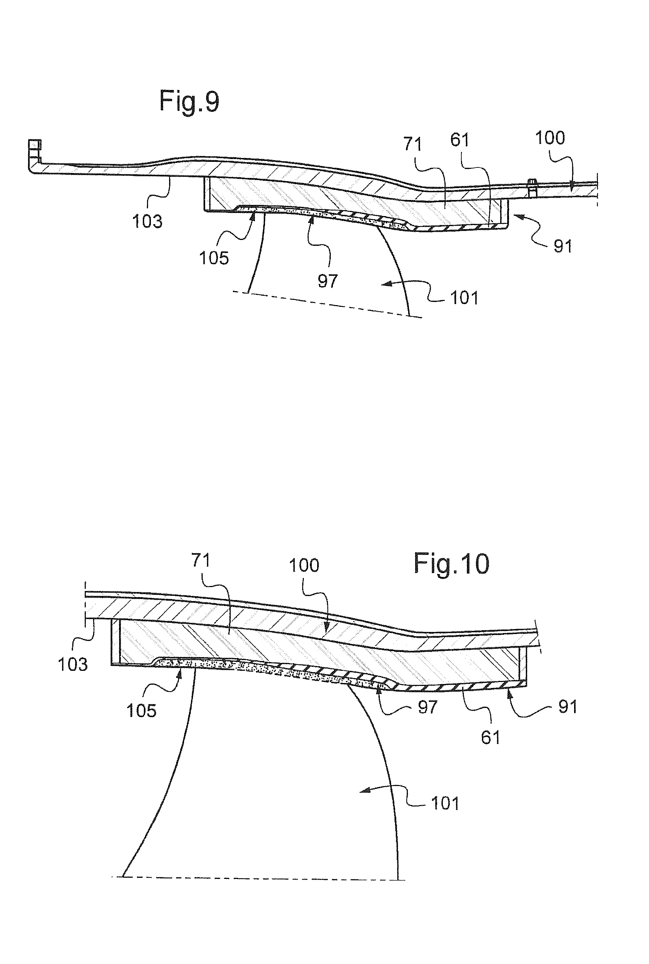

- la figure 9 est une vue en coupe de situation d'un secteur de joint annulaire abradable au sein d'une turbomachine comprenant la pièce de matériau abradable selon l'invention,
- la figure 10 est une vue schématique en coupe d'un secteur de joint annulaire abradable au sein d'une turbomachine comprenant la pièce de matériau abradable selon l'invention, et

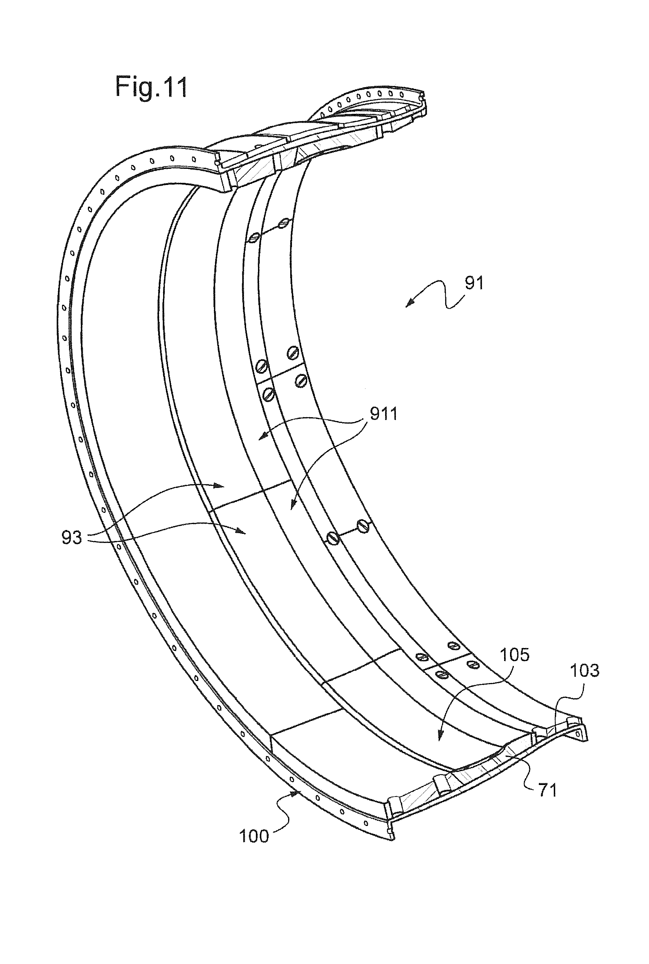

- la figure 11 est une vue en perspective partielle d'un carter de turbomachine portant des secteurs de joint annulaire abradable comprenant la pièce de matériau abradable selon l'invention.

Les dessins annexés comprennent des éléments de caractère certain. Ils pourront donc, non seulement servir à compléter l'invention, mais aussi contribuer à sa définition, le cas échéant. Il est relevé que des éléments comme la géométrie des pièces décrites dans la suite sont difficiles à définir complètement, autrement que par le dessin. En outre, certaines formes et dimensions sont fonction de la destination des pièces.

Une turbomachine comprend une soufflante 101 munie d'aubes et un carter 100 circonférentiel correspondant. On souhaite ici munir la surface annulaire interne 103 du carter 100 d'une piste 105 annulaire de matériau abradable pour former un joint annulaire abradable 91. Le joint annulaire abradable 91 est ici un assemblage de secteurs 911. La piste 105 annulaire est un assemblage de pistes 93 de matériau abradable appartenant chacune à un secteur 911. Pour fabriquer les pistes 93, on commence par fabriquer des pièces 25 moulées, ou pains, de matériau abradable.

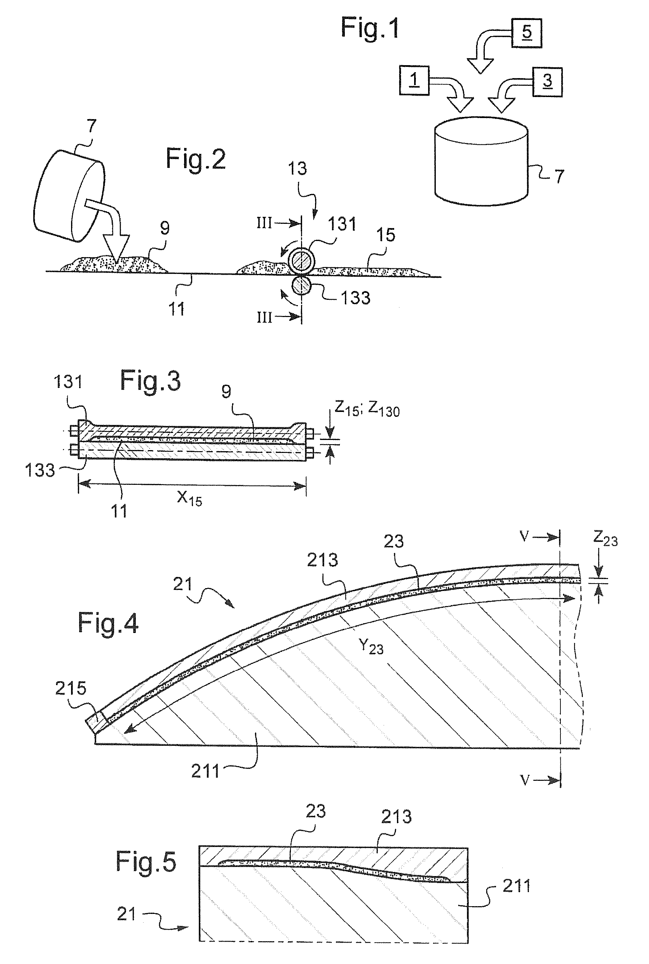

On se réfère d'abord à la figure 1 représentant schématiquement l'opération de mélange d'une résine époxy 1 et d'un agent de réticulation 3 pour fabriquer la pièce 25 moulée de matériau abradable selon l'invention. La résine époxy 1 et l'agent de réticulation 3 sont placés dans un mélangeur 7. En fonction des propriétés souhaitées pour le produit final, d'autres composants 5 peuvent être ajoutés. On cite à titre d'exemple non limitatif les composants 5 additifs suivants, ajoutés seuls ou en combinaison :
- des microsphères de verre creuses (N° CAS : 65997-17-3) telles que celles vendues sous les références "Scotchlite^{™} Glass Bubbles" par la société 3M de sorte que la masse volumique du mélange soit faible tout en préservant le produit des risques d'apparition de fissures ou défauts,
- des colorants de sorte que le produit final soit visuellement identifiable.

Dans l'exemple décrit ici, une combinaison de différentes résines époxy 1 est utilisée : du bisphénol-A-épichlorhydrine (N° CAS : 25068-38-6), du Bisphénol-F-(épichlorhydrine) (N° CAS : 25064-14-4). L'agent de réticulation 3 comprend de la poly(oxypropylène)diamine (N° CAS : 9046-10-0).

Des kits prêts à mélanger sont vendus sous la référence "*3M^{™} Scotch-Weld^{™} Structural Void Filling Compound 3550 FST B*/*A, Kit"* et "*EC-3524 B*/*A*" par la société 3M. La seconde référence comprend des microsphères de verre creuses.

Le mélangeur 7 est ici un pétrin industriel, ou mixeur à spirale, fonctionnant à une vitesse suffisamment lente pour limiter le risque de détérioration des microsphères en verre creuses. Le modèle de mélangeur baptisé "Aquamix" de la société VMI peut par exemple être utilisé. Les composants sont mélangés et malaxés jusqu'à obtenir une pâte 9 d'apparence homogène. La présence de colorants différents dans les composants utilisés peut faciliter le contrôle visuel de l'homogénéité. La pâte 9 obtenue présente une couleur unie.

La mise en contact de la base de polymère, ici la résine époxy, avec l'agent de réticulation, le durcisseur ou l'accélérateur adapté provoque, sinon l'initiation, du moins la polymérisation rapide de la résine. Dans l'exemple décrit ici, la polymérisation est complète après environ 48 heures à température ambiante et sous hotte aspirante. La polymérisation induit ici un durcissement et un passage de l'état de pâte thixotropique à celui de solide. Les étapes de mise en forme doivent être mises en oeuvre avant la polymérisation totale et surtout la solidification du mélange et de préférence au plus tôt après les opérations de mélange.

Comme cela est représenté en figure 2, la pâte 9 obtenue est déposée depuis le mélangeur 7 sur un tapis roulant 11, ou nappe, pour être convoyé vers un laminoir 13. Le laminoir 13 comprend ici un ensemble de deux rouleaux 131, 133, visibles en figure 3. Les deux rouleaux, l'un supérieur 131, l'autre inférieur 133 présentent des axes de rotation parallèles entre eux et perpendiculaires à la direction d'avancement du tapis roulant 11. Cette opération de laminage peut être appelée calandrage dans le sens où la mise en forme de la pâte 9 est entamée durant cette étape. Dans des variantes, le laminoir 13 comprend un seul ou plus de deux rouleaux, par exemple plusieurs paires de rouleaux successives.

Dans l'exemple décrit ici, le rouleau inférieur 133 présente une surface extérieure cylindrique et sensiblement lisse. Le rouleau supérieur 131 comprend une portion de surface extérieure centrale cylindrique et de petit diamètre disposée entre deux portions de surfaces d'extrémités cylindrique de grand diamètre. La portion de surface centrale et chacune des portions de surface d'extrémités sont respectivement reliées par une portion de surface intermédiaire tronconique. La distance séparant l'axe de rotation du rouleau supérieur 131 et l'axe de rotation du rouleau inférieur 133 est adaptée de sorte que chacune des portions de surface d'extrémités cylindriques du rouleau supérieur 131 soient en contact avec la surface extérieure cylindrique du rouleau inférieur 133. L'écart Z₁₃₀ entre la portion de surface extérieure centrale du rouleau supérieur 131 et la surface extérieure cylindrique du rouleau inférieur 133 est sensiblement constant.

Durant le laminage/calandrage, les rouleaux 131, 133 sont mis en rotation selon leur axe de rotation respectif et dans un sens contraire compatible avec l'avancement du tapis roulant 11, de la gauche vers la droite sur la figure 2. En sortie du laminoir 13, la pâte 9 a pris la forme d'une bande de pâte 15. La bande de pâte 15 présente une largeur X₁₅ constante. La largeur X₁₅ comprend les portions d'extrémités résultantes des portions de surface intermédiaire tronconiques du rouleau supérieur 131. La largeur X₁₅ peut être comprise entre 10 et 100 centimètres, par exemple 30 centimètres.

Dans une variante non représentée, le rouleau formant la surface de travail de la pièce 25 de matériau abradable, ici le rouleau inférieur 133, présente une surface matricée. La surface matricée, c'est-à-dire munie d'empreintes, est agencée pour former par pression des empreintes complémentaires dans la surface de travail de la bande de pâte 15. La surface matricée peut aussi être portée par un rouleau distinct de celui du laminoir 13. Une surface non lisse, avec des empreintes ou des sillons, permet d'améliorer encore l'efficacité du joint annulaire abradable 91 en fonctionnement.

La bande de pâte 15 présente une épaisseur Z₁₅ sensiblement constante à l'exception des portions d'extrémités dans la direction de sa largeur. Ces dernières présentent une forme biseautée résultante des portions de surface intermédiaire tronconiques du rouleau supérieur 131. L'épaisseur Z₁₅ est sensiblement égale à l'écart Z₁₃₀. Ici, l'épaisseur Z₁₅ est comprise entre 5 et 15 millimètres, par exemple 7 millimètres. En variante, l'épaisseur Z₁₅ peut varier dans la largeur de la bande de pâte 15, par exemple entre 7 et 11 millimètres. En sortie du laminage, la bande de pâte 15 est produite de manière sensiblement continue. Le laminage est ici réalisé à température ambiante. Le laminage est ici réalisé à vitesse sensiblement constante, par exemple entre 1 et 30 mètres linéaires par minute.

Dans une étape ultérieure non représentée, la bande de pâte 15 est sectionnée en tronçons 23. La bande de pâte 15 est mise à longueur. Les tronçons 23 présentent une longueur Y₂₃ sensiblement identique pour chaque tronçon 23. La largeur X₂₃ et l'épaisseur Z₂₃ du tronçon 25 sont inchangées par rapport à celles X₁₅ et Z₁₅ de la bande de pâte 15. En variante, la coupe de la bande de pâte 15 en tronçons 23 est réalisée à la suite du laminage, par exemple sur la même chaîne de fabrication.

La longueur Y₂₃, la largeur X₂₃ et l'épaisseur Z₂₃ du tronçon 23 correspondent sensiblement à celles de la pièce 25 de matériau abradable que l'on souhaite produire. Ces dimensions sont adaptées pour correspondre à un logement 97 prévu en surface interne 103 d'un carter 100 de soufflante 101 de turbomachine. Le logement 97 peut aussi être ménagé dans un support 71 de renfort solidaire dudit carter 100.

Comme représenté en figure 4, un tronçon 23 est disposé dans un moule 21. Sur la figure 4, une moitié seulement de l'assemblage est représenté, celui-ci présentant un plan de symétrie correspondant à l'axe V-V. Le moule 21 comprend une base 211 et un couvercle 213. Le moule 21 comprend en outre des cales 215 bloquant le tronçon 23 dans le moule 21. La base 211, le couvercle 213 et les cales 215 sont agencés pour former, à l'état assemblé et fermé, un logement intérieur présentant les formes et dimensions finales souhaitées de la pièce 25 de matériau abradable. Cette forme et ces dimensions correspondent sensiblement à celles du logement 97 prévu en surface interne 103 du carter 100 de soufflante 101 de turbomachine. Le tronçon 23 de pâte est, ici, soumis à des températures adaptées pour provoquer ou accélérer la polymérisation du tronçon 23. La température est, ici, comprise entre environ 50 et 80°C, par exemple 60°C. Après une durée de polymérisation adaptée en fonction de la composition et des dimensions du tronçon 23, la pièce 25 de matériau abradable à l'état durci est démoulée. La pièce 25 de matériau abradable est préformée.

La pièce 25 de matériau abradable a la forme d'un secteur d'anneau de largeur X₂₅, de longueur circonférentielle Y₂₅ et d'épaisseur Z₂₅. Ces dimensions sont sensiblement homogènes dans la pièce 25. Ces dimensions sont respectivement et sensiblement similaires à celles X₂₃, Y₂₃ et Z₂₃ du tronçon 23. La forme incurvée de la pièce 25 est fixée par le durcissement.

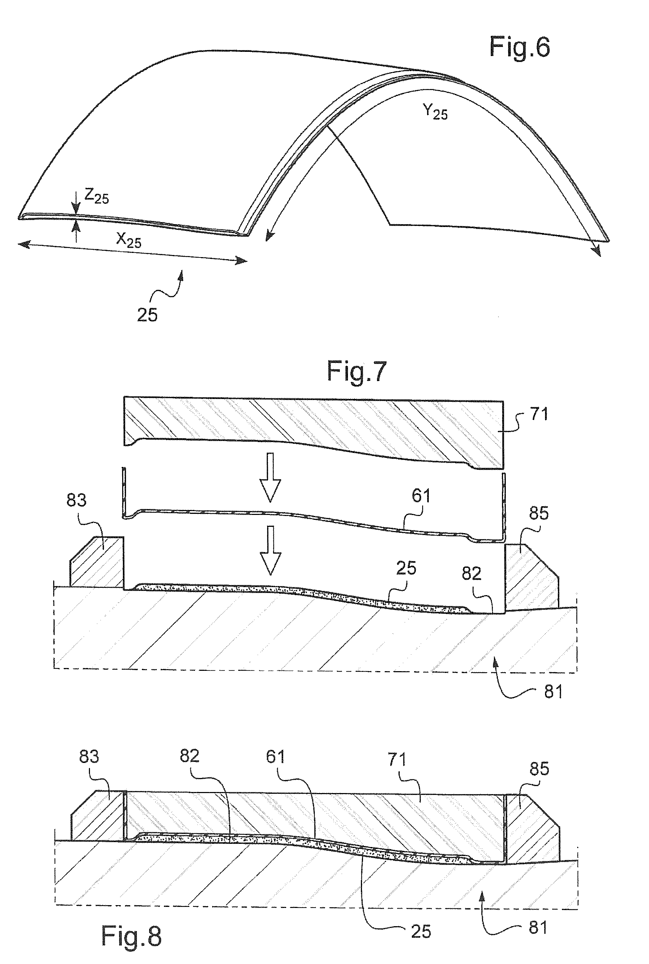

Un exemple de pièce 25 de matériau abradable est représenté en figure 6. La pièce 25 de matériau abradable représenté ici prend la forme d'une coque à une seule dimension de courbure dans le plan perpendiculaire à la direction de la largeur. La pièce 25 de matériau abradable est de largeur X₂₅ et d'épaisseur Z₂₅ sensiblement constantes, à l'exception de l'épaisseur des extrémités de forme biseautée. La valeur de la courbure dépend de celle du logement 97 dans le carter 100 et de la position radiale de la piste 93 dans la turbomachine. Autrement dit, la courbure dépend du diamètre final de la piste abradable 105 du joint annulaire abradable 91.

La longueur Y₂₅ de la pièce 25 de matériau abradable correspond à un secteur d'anneau du joint annulaire abradable 91. Dans l'exemple décrit ici, cinq pièces 25 de matériau abradable, représentant chacune environ 72° de l'anneau complet sont nécessaires pour fabriquer cinq secteurs 911 du joint annulaire abradable 91.

Dans l'exemple décrit ici, le joint annulaire abradable 91 est réalisé au moyen d'une combinaison de cinq secteurs 911 sensiblement équivalents, soit environ 72 degrés. Les secteurs annulaires complémentaires peuvent être semblables ou non. De manière générale, la réalisation du joint annulaire abradable 91 par l'assemblage de plusieurs secteurs annulaires répond à des contraintes techniques et de coûts de fabrication, relative notamment à la taille des machines nécessaires aux différentes étapes de fabrication, à l'encombrement du stockage, etc.

En variante, le joint annulaire abradable 91 est réalisé au moyen d'une unique pièce 25 de matériau abradable annulaire (soit 360 degrés). La pièce 25 de matériau abradable est dimensionnée pour la fabrication d'un secteur 911 de joint annulaire abradable 91 d'environ 360°. Dans ce cas un seul secteur 911 de 360° est suffisant et confondu avec le joint annulaire abradable 91 complet lui-même. La réalisation en un seul morceau du joint annulaire 91 permet l'économie des opérations d'assemblage des secteurs 911.

Les pièces de matériau abradable 25 ainsi produites peuvent être stockées ou utilisées de suite pour la fabrication d'un secteur de joint annulaire abradable 91 ou pour la réparation/réfection d'un tel joint annulaire abradable 91.

La figure 7 représente une vue éclatée et en coupe selon un plan perpendiculaire à la longueur de la pièce 25 de matériau abradable. Un moule 81 comprend un fond 82 et des rebords 83, 85. Une pièce 25 de matériau abradable est disposée contre le fond 82 du moule 81. La pièce 25 de matériau abradable peut être obtenue par exemple par la mise en oeuvre du procédé décrit en rapport avec les figures 1 à 6.

Dans une variante, le fond 82 du moule 81 comprend des empreintes. Ces empreintes sont agencées pour former des empreintes complémentaires dans la surface de la pièce 25 de matériau abradable appliquée contre le fond 82. Une surface non lisse, avec des empreintes ou des sillons, permet d'améliorer encore l'efficacité du joint annulaire abradable 91 en fonctionnement.

La pièce 25 de matériau abradable ainsi que les surfaces intérieures du moule 81 restées libres après la disposition de la pièce 25 de matériau abradable sont recouvertes d'un tissu composite 61.

Le tissu composite 61 comprend des fibres imprégnées de résine thermodurcissable. Dans l'exemple décrit ici, les fibres sont des fibres de verre. En variante le tissu composite 61 peut comprendre des fibres de carbone. Le tissu composite 61 comprend ici une armure de renfort dite "satin", par exemple un "satin de 5". L'appellation "satin" signifie que le tissage de l'armure du tissu est réalisé de manière à ce que les points de liage ne se touchent pas. Le "5" signifie que le motif élémentaire du tissage est un carré de 5 mailles sur 5. En variante, le tissu composite 61 comprend une armure de renfort dite "taffetas" ou "toile". L'appellation taffetas ou toile signifie que le tissage de l'armure du tissu est réalisé de manière à ce que chaque fil de chaîne passe alternativement au-dessus et au-dessous de chaque fil de trame et réciproquement. Le grammage de l'armure de renfort peut être compris entre 150 et 350 grammes par mètre carré, par exemple 305 grammes par mètre carré.

Le tissu composite 61 est imprégné ici d'une résine époxy, par exemple de la résine époxy vendue sous la référence "MTM®49L" par la société CYTEC. Le tissu composite 61 est imprégné avec un taux de résine en masse compris entre 30 et 50%, par exemple 43%.

Le terme "tissu composite" peut désigner ici un pli unique ou une superposition de plis, similaires ou non. L'épaisseur voulue est choisie en adaptant les conditions (pression et température) de polymérisation, le nombre de couches mises en oeuvre et/ou des décalages dans la superposition générant des épaisseurs différentes dans une pièce donnée.

La présence de résine dans le tissu composite 61 confère audit tissu imprégné un aspect dit "pégueux". Autrement dit, le tissu composite 61 présente un aspect collant au toucher. Il est intéressant de protéger ledit tissu composite 61 en appliquant sur la surface opposée à la pièce 25 de matériau abradable, un film protecteur. L'utilisation de film protecteur permet, par exemple, d'éviter la pollution, la salissure ou une quelconque détérioration de surface par des poussières ou des débris présents dans l'environnement. L'utilisation de film protecteur permet de réduire l'encombrement des tissus composites 61 durant leur stockage préalable à la fabrication, par exemple en les enroulant sur eux-mêmes ou en les superposant avant la fabrication du secteur 911 de joint annulaire abradable 91. Le film protecteur disposé sur la surface extérieure du tissu composite 61 lors de son application dans le moule 81 facilite l'application du tissu composite 61 sur la pièce 25 de matériau abradable et les surfaces libres du moule 81. En particulier, les outils et/ou les mains des opérateurs sont protégés de la résine contenue dans le tissu composite 61. Le film protecteur peut être retiré après application du tissu composite 61 dans le moule 81.

Dans l'exemple décrit ici, le tissu composite 61 est prédécoupé sensiblement à sa dimension finale. En variante, le tissu composite 61 peut dépasser du moule 81 puis être découpé ultérieurement.

En variante, le tissu composite 61 subit un préformage dans un moule distinct du moule 81. Par exemple, ce moule distinct peut prendre une forme convexe, dite "positive" ou "mâle". Le préformage du tissu composite 61 sur un moule convexe facilite le travail de drapage par l'opérateur. Le tissu composite 61 est partiellement polymérisé sur le moule convexe pour lui conférer une tenue suffisante pour être déplacé. Le tissu composite 61 est alors déplacé dans le moule 81 sans perdre sa préforme. À ce stade, le tissu composite 61 appliqué sur le moule distinct convexe peut être compacté, par exemple par une mise sous vide. Le tissu composite 61 peut être chauffé. Il est obtenu une préforme, ou "matelas en forme semi-rigide". En outre, l'utilisation d'un tissu composite 61 préformé facilite l'opération d'insertion dans le moule 81, représentée en figure 7.

Un support rigidificateur 71 ou de renfort est à son tour placé dans le moule 81 sur le tissu composite 61. Autrement dit, une superposition dite "sandwich" est réalisée dans laquelle le tissu composite 61 est intercalé entre la pièce 25 de matériau abradable en dessous et le support 71 de renfort au-dessus.

Dans l'exemple décrit ici, le support de renfort 71 est un panneau comprenant une structure en nid d'abeilles présentant des propriétés mécaniques suffisantes pour résister aux contraintes spécifiques des réacteurs d'aéronefs tout en ayant une faible masse. Par exemple, des panneaux référencés "Nomex® 1/8 - 4.0" pour des cellules de 1/8 pouce et une masse de 4 livres par pied-cube ou "Nomex® 3.2 - 64" pour des cellules de 3,2 millimètres et une masse de 64 kilogrammes par mètre-cube sont vendus par la société Schutz. Ces panneaux présentent une masse volumique inférieure à 96 kilogrammes par mètre cube, ici 64 kilogrammes par mètre cube. En variante, des panneaux de structure en nids d'abeilles à base d'aluminium peuvent être utilisés.

Le moule 81 est fermé par un contre-moule et au moyen d'une poche à vide non représentés. Le moule 81 et son contenu sont soumis à une température adaptée pour provoquer une polymérisation de la ou des résines imprégnant le tissu composite 61. Lesdites résines sont fluidifiées de sorte à imprégner le support de renfort 71 d'une part et la pièce 25 de matériau abradable d'autre part. À la solidification, une adhésion apparait entre les trois parties formant l'assemblage. Cette étape peut également être réalisée dans un autoclave. L'autoclave permet l'application d'une pression uniforme sur des pièces présentant des formes complexes. L'assemblage des trois parties précitées est réalisé au cours d'une étape commune.

Après une durée de polymérisation adaptée en fonction des résines utilisées, l'ensemble est ramené à température ambiante. Dans l'exemple décrit ici, la polymérisation ou "cocuisson" est réalisée pendant une durée comprise entre 60 et 720 minutes, par exemple environ 90 minutes. La polymérisation est réalisée ici sous une température d'environ 135°C. L'assemblage comprenant le support 71 de renfort, le tissu composite 61 et la pièce 25 de matériau abradable forment alors un secteur 911 de joint annulaire abradable 91. Le secteur 911 de joint annulaire abradable 91 est démoulé depuis le moule 81.

La surface libre du support 71 de renfort et donc du secteur 911 de joint annulaire abradable 91 est destinée à être appliquée et fixée contre la surface interne du carter 100 de turbomachine. La surface libre du support 71 de renfort est usinée et préparée pour une adhésion audit carter 100.

Le ou les secteur(s) 911 de joint annulaire abradable 91 sont fixés au carter 100 de turbomachine, par exemple par collage et/ou polymérisation. La colle utilisée peut être par exemple un film de colle époxy. La colle référencée "Redux® 322" et vendue par la société Hexcel peut être utilisée. Cette fixation peut être mise en oeuvre dans un autoclave. Selon un mode de réalisation les secteurs 911 de joint annulaire abradable 91 sont adhérisés au carter 100 au cours d'une étape commune en autoclave.

Dans le cas d'un joint annulaire abradable 91 réalisé à partir d'au moins deux secteurs 911, le raccord et la continuité des pistes de matériau abradable 93 de chacun des secteurs 911 est contrôlé et les imperfections éventuelles sont corrigées.

Il est alors obtenu un carter 100 de turbomachine dont la surface radialement intérieure 103 supporte un assemblage comprenant, radialement de l'extérieur vers l'intérieur, un support 71 de renfort, une couche de tissu composite 61 et une piste 105 sensiblement continue et annulaire de matériau abradable résultant de la succession des pistes de matériau abradable 93 des secteurs 911.

Le taux de bulles et de porosités est faible, par exemple inférieur à 10% et même inférieur à 5%. Le joint annulaire abradable 91 présente une résistance à l'arrachement amélioré à l'interface entre la piste abradable 105 et les supports de renfort 71 selon une direction radiale de la turbomachine. La résistance à l'arrachement est ici supérieure à 5.10⁶ Newton par mètre carré (500 N.cm⁻²).

Dans le cadre de l'entretient et des réparations, les secteurs 911 usagés nécessitant une réfection ou un remplacement de la piste abradable 93 peuvent être rapidement échangés. Ainsi, les turbomachines, et donc ici les aéronefs, sont immobilisés seulement le temps d'extraire le secteur 911 usagé et de fixer un secteur 911 neuf ou rénové. Le secteur 911 extrait peut être rénové en atelier par la suite.

Le procédé de fabrication décrit ci-dessus permet d'améliorer l'uniformité de la piste abradable 105 annulaire, son taux de défauts (bulles d'air, impuretés, etc.), ses tolérances dimensionnelles et la continuité de la surface radialement intérieure dite de travail par rapport aux techniques antérieures.

Les moyens mis en oeuvre décrits précédemment permettent en outre une part importante d'automatisation conduisant à une reproductibilité améliorée et des coûts et temps de fabrication réduits.

Comme déjà indiqué, ces produits et techniques trouvent principalement une application dans le domaine de l'aéronautique pour la réalisation de joints stator-rotor de turbomachines d'aéronefs. Cependant, ces produits et techniques peuvent être utilisés dans d'autres domaines pour la réalisation de pistes abradables. Il a été constaté qu'un joint stator-rotor selon l'invention permet d'obtenir des performances au moins égales à celles de l'art antérieur, et cela avec une réduction de la perte de matière, une réduction de la pollution des outillages et/ou des mains des opérateurs, une réduction des délais de fabrication et une meilleure reproductibilité. Les collages involontaires et intempestifs du matériau abradable avec d'autres éléments durant la fabrication et les réparations sont limités.

L'assemblage en une seule étape de la piste abradable au tissu composite et au support de renfort permet d'économiser une étape supplémentaire et postérieure d'usinage de ladite piste abradable. En outre, la fabrication préalable et distincte d'une pièce de matériau abradable permet une inspection et une intervention corrective éventuelle sur celle-ci avant son intégration aux autres composants de la turbomachine. Au contraire des techniques antérieures dans lesquelles une pièce de support existante était revêtue d'une pâte abradable, selon l'invention la pièce de support est fabriquée autour de la pièce abradable qui devient une piste abradable.

## Revendications

1. Pièce (25) moulée de matériau abradable destinée à entrer dans la fabrication d'un secteur (911) de joint abradable annulaire (91) pour turbomachine, ladite pièce (25) comprenant un mélange de résine époxy (1) et d'agent de réticulation (3), la pièce (25) présentant une forme courbée et des dimensions adaptées pour correspondre à un logement (97) prévu à cet effet en surface interne (103) d'un carter (100) de soufflante (101) de turbomachine.

2. Pièce (25) selon la revendication 1, dans laquelle la résine époxy (1) comprend l'un au moins des composants de la liste comprenant le Bisphénol-A-épichlorhydrine et le Bisphénol-F-épichlorhydrine.

3. Pièce (25) selon l'une des revendications 1 et 2, dans laquelle le mélange comprend en outre des sphères de verre creuses.

4. Pièce (25) selon l'une des revendications précédentes, prenant la forme d'un secteur d'anneau de largeur (X₂₅) et d'épaisseur (Z₂₅) sensiblement homogènes dans la pièce (25).

5. Pièce (25) selon l'une des revendications précédentes, présentant un taux de bulles ou de porosités inférieur à 5%.

6. Procédé de fabrication d'une pièce (25) de matériau abradable destinée à entrer dans la fabrication d'un secteur (911) de joint annulaire abradable (91) pour turbomachine, ledit procédé comprenant les étapes suivantes :
a. mélanger une résine époxy (1) et un agent de réticulation (3) dans un mélangeur (7) afin d'obtenir une pâte (9),
b. laminer la pâte (9) dans un laminoir (13), le laminoir (13) étant agencé de sorte qu'une bande de pâte (15) présentant une largeur (X₁₅) et une épaisseur (Z₁₅) sensiblement constantes est obtenue,
c. sectionner la bande de pâte (15) en tronçons (23),
d. faire polymériser et durcir un tronçon (23) dans un moule (21), le moule (21) étant agencé pour former une pièce (25) de matériau abradable présentant une forme courbée et des dimensions adaptées pour correspondre à un logement (97) prévu à cet effet en surface interne (103) d'un carter (100) de soufflante (101) de turbomachine.

7. Procédé selon la revendication 6, dans lequel les étapes b. et c. sont mise en oeuvre sur une chaîne de fabrication commune.

8. Procédé selon l'une des revendications 6 et 7, dans lequel les tronçons (23) formés sont dimensionnés pour la fabrication d'un secteur (911) de joint annulaire abradable (91) d'environ 360°.

9. Procédé selon l'une des revendications 6 à 8, dans lequel une étape supplémentaire est mise en oeuvre :
b'. former des empreintes dans une surface de la bande de pâte (15).

10. Procédé selon la revendication 9, dans lequel l'étape b. de laminage et l'étape supplémentaire b' formant les empreintes sont réalisées au moyen d'au moins un rouleau (133) commun, ledit rouleau (133) présentant une surface matricée pour former lesdites empreintes par pression.
